# EUROPEAN PATENT APPLICATION

(11) **EP 3 006 913 A1**
(43) Date of publication of application: **13.04.2016**
(21) Application number: 14806959.4
(22) Date of filing: 03.06.2014
(51) Int. Cl.: G01L 5/00, G01D 3/028, G06F 3/041

(54) **PHYSICAL QUANTITY SENSOR ADJUSTMENT METHOD, AND PHYSICAL QUANTITY SENSOR**

(30) Priority: 06.06.2013 JP 2013119504
(71) Applicant: Panasonic Intellectual Property Management Co., Ltd., Osaka-shi, Osaka 540-6207 (JP)
(72) Inventor: ISHIBA, Hideaki, Osaka-shi, Osaka 540-6207 (JP); NISHIMIYA, Yusaku, Osaka-shi, Osaka 540-6207 (JP); UKITSU, Hironobu, Osaka-shi, Osaka 540-6207 (JP)
(74) Representative: Vigand, Philippe
(86) International application number: PCT/JP2014/002926
(87) International publication number: WO 2014/196188

(57) **Abstract**

A physical quantity sensor includes a detector that outputs a detection signal in response to an input to a device, and a controller that outputs a signal corresponding to the input to the device based on the detection signal. A method for adjusting the physical quantity sensor is performed based on a value of the detection signal in a steady state and a fluctuation of a value of the detection signal within a predetermined duration. The physical quantity sensor has a first threshold for the value of the detection signal for determining presence or absence of the input, and a second threshold for the fluctuation of the value of the detection signal within a predetermined duration for determining presence or absence of the noise in the detection signal. In this method, a first process for increasing at least one of the first threshold and the second threshold is executed in a case that the value of the detection signal is within a range of the first threshold and that the fluctuation of the detection signal within the predetermined duration is out of a range of the second threshold. This method for adjusting the physical quantity sensor reduces effects of external factors.

## Description

### TECHNICAL FIELD

The present invention relates to a physical quantity sensor which is operable in accordance with a physical quantity given to a device, such as a smartphone and a tablet type personal computer (PC), and to a method for adjusting the physical quantity sensor.

### BACKGROUND ART

A conventional electronic device, such as information devices, operative based on detection of an input includes a detector, such as a pressure sensor, and operates in accordance with a detection signal output from the detector. This type of electronic device may cause a problem of a detection accuracy drop due to external factors, such as a change of a noise environment.

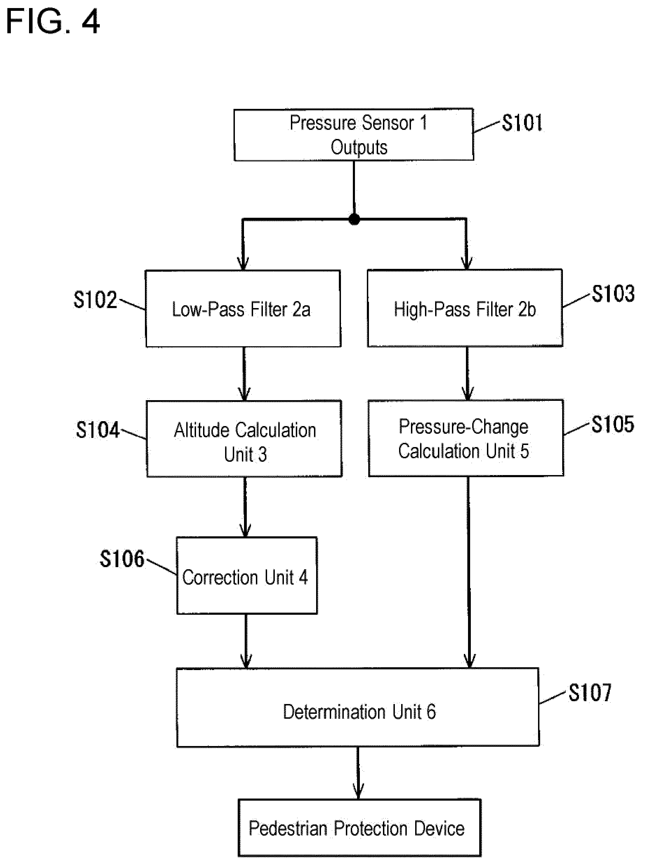

In order to address this problem, the conventional electronic device includes a correction unit for correcting at least one of a threshold and a gain for a high-frequency component. As an example, a conventional vehicle collision detection device includes a correction unit for correction based on a pressure change according to an altitude. The correction unit also corrects at least one of a gain for a high-frequency component and a threshold based on a change of an external environment except for the pressure change, in accordance with the altitudes. In a vehicle collision detection device including a conventional correction unit shown in FIG. 4, a frequency separation unit including low-pass filter 2a and high-pass filter 2b separates an output from pressure sensor 1 (S101) into frequency components (S102, S103). Altitude calculation unit 3 calculates an altitude value from a low frequency component (S104). Correction unit 4 corrects a threshold (S106). Pressure-change calculation unit 5 calculates a pressure change (S105). Determination unit 6 determines presence or absence of collision based on outputs from correction unit 4 and pressure change calculation unit 5 (S107) (PTL 1).

### CITATION LIST

### PATENT LITERATURE

PTL 1: Japanese Patent Laid-Open Publication No.2012-091664

### SUMMARY

A method for adjusting a physical quantity sensor is a method for adjusting a physical quantity sensor including a detector that outputs a detection signal in response to an input to a device, and a controller that outputs a signal corresponding to the input to the device based on the detection signal. The method for the physical quantity sensor has a first threshold for value of the detection signal for determining presence or absence of an input, and a second threshold for a fluctuation of the value of the detection signal within a predetermined duration for determining presence or absence of noise in the detection signal. In this method, a first process for increasing at least one of the first threshold and the second threshold is executed in cases that the value of the detection signal is within a range of the first threshold and that the fluctuation of the detection signal within the predetermined duration is out of a range of the second threshold.

Another method for adjusting a physical quantity sensor has a first duration for continuously measuring a value of a detection signal, a first threshold for the value of the detection signal for determining presence or absence of an input, and a second threshold for a fluctuation of the value of the detection signal within a predetermined duration for determining presence or absence of noise in the detection signal. In this method, a second process for updating a reference value to the value of the detection signal is executed in a case that the value of the detection signal is out of a range of the first threshold continuously for the first duration.

A physical quantity sensor that detects an input to a device includes a detector that outputs a detection signal, and a controller that outputs a control signal corresponding to the input to the device based on a difference between the detection signal and a reference value. This physical quantity sensor changes a setting value based on a value of the detection signal in a steady state and a fluctuation of the value of the detection signal within a predetermined duration. The physical quantity sensor has a first threshold for the value of the detection signal for determining presence or absence of an input, and a second threshold for the fluctuation of the value of the detection signal within the predetermined duration for determining presence or absence of noise in the detection signal. At least one of the first threshold and the second threshold is increased in cases that the value of the detection signal is within a range of the first threshold and that the fluctuation of the detection signal within the predetermined duration is out of a range of the second threshold.

The method for adjusting the physical quantity sensor and the physical quantity sensor reduce effects of external factors, and increase detection accuracy of a physical quantity input to the device.

### BRIEF DESCRIPTION OF DRAWINGS

FIG. 1 is a schematic view of an electronic device including a physical quantity sensor according to an exemplary embodiment.
FIG. 2 is a schematic view of the electronic device including the physical quantity sensor according to the embodiment.
FIG. 3A shows a change of a value of a detection signal with time generated from the physical quantity sensor according to the embodiment.
FIG. 3B shows a change of a fluctuation of the detection signal with time generated from the physical quantity sensor according to the embodiment.
FIG. 4 is a block diagram of a conventional pressure sensor temperature correction circuit.

### DETAIL DESCRIPTION OF PREFERRED EMBODIMENT

A physical quantity sensor according to an exemplary embodiment will be described with reference to the drawings.

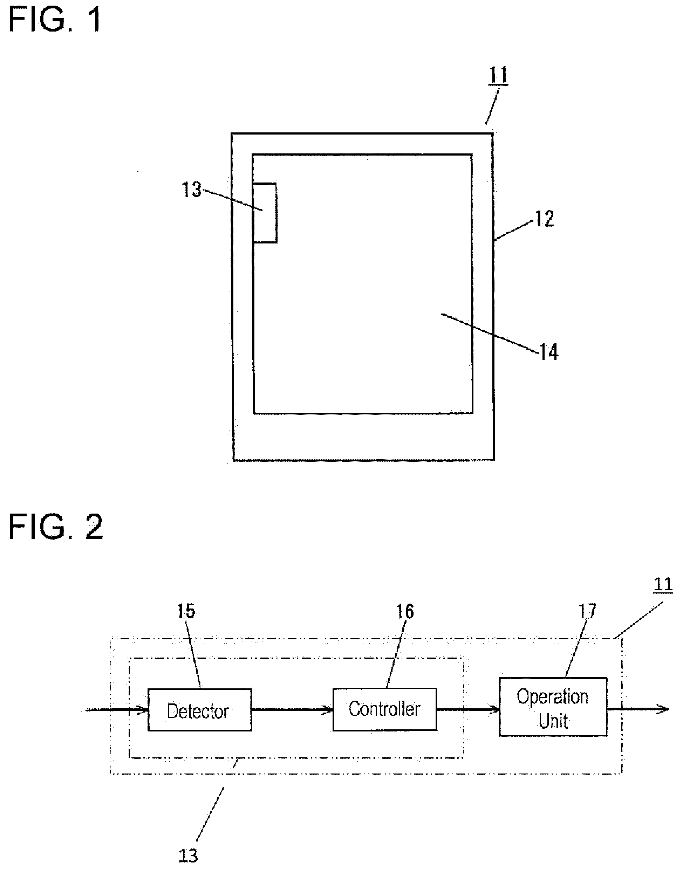

FIG. 1 is a schematic view of electronic device 11 including physical quantity sensor 13 according to the embodiment. According to the embodiment, electronic device 11 corresponds to a device while a pressing force corresponds to a physical quantity applied to the device.

Electronic device 11 according to the embodiment detects a pressing force which corresponds to a physical quantity applied to case 12, as a distortion produced in the case with physical quantity sensor 13 provided on a side surface of case 12. Electronic device 11 operates in accordance with this pressing force. Electronic device 11 includes display unit 14. When physical quantity sensor 13 detects a pressing force applied to case 12, electronic device 11 performs an action, such as the moving of an image displayed on display unit 14, in accordance with the pressing force.

FIG. 2 is a schematic view of electronic device 11 including physical quantity sensor 13 according to the embodiment. Electronic device 11 according to the embodiment includes physical quantity sensor 13 and operation unit 17. Physical quantity sensor 13 includes detector 15 and controller 16.

The pressing force applied to electronic device 11 is detected by detector 15, and is output from detector 15 to controller 16 as a detection signal. Controller 16 outputs, to operation unit 17, a control signal corresponding to the detection signal. Operation unit 17 operates electronic device 11 in accordance with the control signal.

An operation of physical quantity sensor 13 will be described below. Physical quantity sensor 13 detects a pressing force applied to case 12 as, e.g. a distortion. Detector 15 of physical quantity sensor 13 includes a beam (not shown) including a piezoelectric body (not shown), as an example of a configuration for detection of distortion. The piezoelectric body includes a driving electrode (not shown) and a monitoring electrode (not shown). The beam vibrates in response to a driving voltage applied to the driving electrode while the monitoring electrode detects the vibration of the beam. When a distortion is produced in case 12, a natural frequency of the beam changes in accordance with the level of the distortion produced in case 12. Accordingly, the monitoring electrode detects the vibration of the beam as a current. The change of the natural frequency is detected as a change of a frequency of the current. The detection signal is a current detected by the monitoring electrode while a value of the detection signal is a frequency of the detection signal.

Controller 16 calculates a fluctuation of the value of the detection signal in a predetermined duration. The fluctuation is a value corresponding to a change of the detection signal. For example, the fluctuation is a variance. The variance is calculated by obtaining an average of the values of the detection signal sampled in a predetermined duration, and squaring differences between the average and each of the values of the detection signal within the duration. The predetermined duration is preferably a duration appropriate for determining a level of noise. In physical quantity sensor 13 in accordance with the embodiment, this predetermined duration is 500 ms. The predetermined duration may be appropriately set to a value ranging from 100 ms to 3 sec in accordance with the configuration and purpose of use of electronic device 11.

The fluctuation may be the differential value of the frequency of the detection signal, or a difference between frequencies detected every predetermined interval, instead of the variances. In the case that the fluctuation is a variance obtained by squaring the difference between the average of the values of the detection signal and each of the values of the detection signal in the predetermined duration, values of the variances become larger than the differential values as the fluctuation, for example. In this case, noise is more easily detectable.

Controller 16 also calculates an average of the fluctuation. The average of the fluctuation corresponds to an average of a fluctuation in a predetermined duration for calculating the fluctuation.

Controller 16 stores a reference value, a first threshold, a second threshold, a first duration, and a second duration as setting values previously determined. The reference value is set to a value of the detection signal in a steady state in which electronic device 11 is not affected by factors, such as an input and a malfunction. The first threshold is a value to be compared with an absolute value of a difference between the reference value and a value of the detection signal. The first threshold is a threshold for mainly determining presence or absence of an input to electronic device 11. The second threshold is a value to be compared with the fluctuation or the average of the fluctuation. The second threshold is a threshold for mainly detecting presence or absence of noise in the detection signals. The first duration is a duration for which values of the detection signal is continuously measured to determine presence or absence of a constant pressing force applied from, e.g. a cover attached thereto to electronic device 11, and presence or absence of an input from an operator to electronic device 11. The second duration is a duration for which the average of the fluctuation is continuously measured to determine presence or absence of an effect of noise entering in electronic device 11 by a fluctuation of a power source voltage or others, and presence or absence of an input from the operator. In physical quantity sensor 13 according to the embodiment, the first duration is 2 sec while the second duration is 5 sec.

Physical quantity sensor 13 detects an input of a physical quantity to electronic device 11 based on a difference between the detection signal and the reference value. A method for this detection will be described below.

Upon allowing detector 15 of physical quantity sensor 13 to detect the detection signal, controller 16 of physical quantity sensor 13 measures a value of the detection signal for a predetermined duration to calculate the fluctuation. Controller 16 also calculates an average of the fluctuation.

In cases that an absolute value of a difference between the value of the detection signal and the reference value become not smaller than the first threshold and that the fluctuation thus becomes not smaller than the second threshold resulting from that the absolute value of the difference become not smaller than the first threshold, controller 16 determines that the detection signal generated at this time is a signal generated by a physical quantity applied to electronic device 11. In this case, controller 16 outputs, to operation unit 17, a value corresponding to the value of the detection signal from which the reference value has been subtracted, as a control signal corresponding to the physical quantity applied to electronic device 11. This process executed by controller 16 is hereinafter referred to as a normal process.

After that, operation unit 17 operates electronic device 11 in accordance with this control signal.

For example, in a case that the frequency of the detection signal in the steady state, i.e., the reference value is F₁ kHz, and that the first threshold is F₂ kHz, controller 16 outputs a control signal of F₂ kHz-F₁ kHz in response to an input of the detection signal of F₂ kHz. In this case, controller 16 assumes that an input corresponding to a frequency change of F₂ kHz - F₁ kHz is given to operation unit 17, and electronic device 11 performs an operation corresponding to a pressing force of F₂ kHz - F₁ kHz.

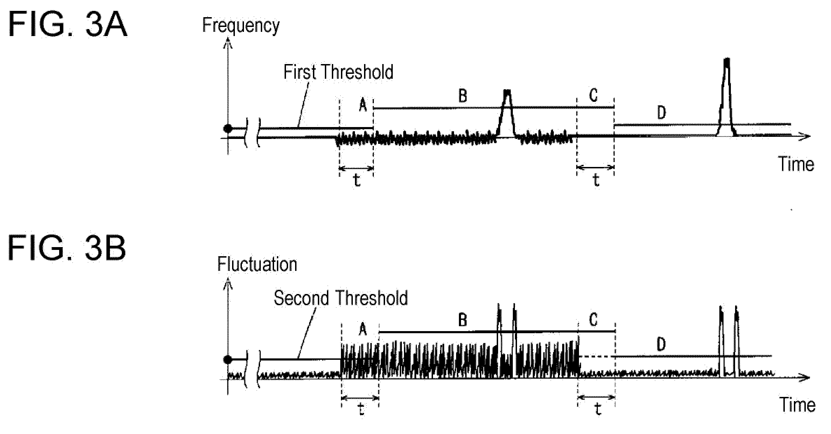

Physical quantity sensor 13 may be affected by noise. When the detection signal contains noise, electronic device 11 may malfunction. An operation executed when the detection signal generated from physical quantity sensor 13 according to the embodiment contains noise will be described below with reference to FIGS. 3A and 3B.

FIGs. 3A and 3B show a change of the value of the detection signal with time generated from the physical quantity sensor according to the embodiment, and a change of the fluctuation of the detection signal with time generated from the physical quantity sensor according to the embodiment, respectively.

In FIGs. 3A and 3B, area A is an area containing noise added to the detection signal, area B is an area corresponding to the updated first threshold, area C is an area from which noise is removed, and area D is an area corresponding to the first threshold returned to the original threshold. In FIG. 3A, the horizontal axis represents time, and the vertical axis represents the difference between the value of the detection signal and a reference signal. In FIG. 3B, the horizontal axis represents time and identical to the horizontal axis of FIG. 3A, and the vertical axis represents the fluctuation. In FIGs. 3A and 3B, "t" indicates the second duration.

An operation based on the detection signal containing noise will be described. When the detection signal contains noise, the value of the detection signal is within a first range of the first threshold while the fluctuation of the detection signal for the predetermined duration is out of a second range. The first range of the first threshold is referred to as a threshold for the absolute value of the difference between the value of the detection signal and the reference value. When the value of the detection signal is within the first range of the first threshold, the absolute value of the difference between the value of the detection signal and the reference value is smaller than the first threshold. The second range of the second threshold is referred to as a range of a threshold for the average of the fluctuation. When the fluctuation of the detection signal for the predetermined duration is out of the second range of the second threshold, the average of the fluctuation is not smaller than the second threshold continuously for the second duration. In area A shown in FIGs. 3A and 3B, the difference between the frequency of the detection signal and the reference value is smaller than the first threshold while the average of the fluctuation of the detection signal is not smaller than the second threshold. In this case, the frequency of the detection signal fluctuates due to only an effect of noise.

When the effect of noise in the detection signal continues for only a short period of time, the operation of electronic device 11 is not considerably affected. However, when the effect of noise is imposed on electronic device 11 for a long period of time, the noise may become a factor causing a malfunction of electronic device 11. Accordingly, when the average of the fluctuation of the detection signal is not smaller than the second threshold continuously for the second duration, it is determined that the effect of noise is constantly imposed. In this case, controller 16 of physical quantity sensor 13 increases the first threshold as shown in area B shown in FIG. 3A. The increasing amount of the first threshold is set to the reference value. Accordingly, the first threshold after the increasing is the sum of the reference value and the first threshold before the increasing.

This process for increasing the first threshold executed by controller 16 when the average of the fluctuation of the detection signal is not smaller than the second threshold continuously for the second duration is hereinafter referred to as a first process. Controller 16 executes the first process with higher priority than the normal process.

The phrase "executing with higher priority" refers to a processing based on priority given to plural processes when these processes are determined to be simultaneously executed sequentially from a process with higher priority. More specifically, the first process has higher priority than the normal process, and therefore, is executed with priority over the normal process. Accordingly, when simultaneous execution of the first process and the normal process is determined, the first process and the normal process are executed in this order.

Controller 16 increases and updates the first threshold when the average of the fluctuation is not smaller than the second threshold continuously for the second duration. However, controller 16 maintains the first threshold without a change when the average of the fluctuation is not smaller than the second threshold for only a short period of time. Accordingly, a detection sensitivity of electronic device 11 does not drop. Moreover, controller 16 performs control for preventing malfunctions only when a large effect is imposed on electronic device 11, hence reducing malfunctions without deteriorating a use impression of a user.

In the first process, controller 16 may increase the second threshold instead of the increasing of the first threshold. The effect of noise similarly decreases when controller 16 increases the second threshold in the first process. Area B shown in FIG. 3B indicates a fluctuation when the second threshold is increased. When the average of the fluctuation of the detection signal is not smaller than the second threshold continuously even after the increase of the second threshold under the control of controller 16 in the first process, electronic device 11 may malfunction due to the effect of noise. For avoiding this problem, the second threshold is further increased. It is determined whether or not the average of the fluctuation of the detection signal becomes smaller than the further increased second threshold. By repeating these operation until the average of the fluctuation of the detection signal becomes smaller than the second threshold, malfunctions are prevented more accurately.

Controller 16 may increase both the first threshold and the second threshold in the first process. The increase of both the first threshold and the second threshold reduces of the effect of noise more effectively than the increase of only one of the first threshold and the second threshold.

When the second duration for determining the effect of noise is 5 sec, electronic device 11 can detect the effect of noise without deteriorating a use impression of the user. However, the second duration may be appropriately set to a value ranging from 1 sec to 25 sec in accordance with the configuration and purpose of use of electronic device 11.

Controller 16 may execute a process described below in addition to the normal process and the first process.

It is assumed herein that electronic device 11 constantly receives a pressing force from, e.g. a cover attached to electronic device 11. In this case, both the constant pressing force and the pressing force applied by a user are added to a frequency corresponding to a value of the detection signal, and hence, may cause electronic device 11 to malfunction.

For example, a user applies intentional pressing force to electronic device 11 and changes the frequency of the detection signal to F₃ kHz while the frequency of the detection signal in the steady state to which no load is imposed, i.e., the reference value is F₁ kHz, the first threshold is F₂ kHz, and the frequency of the detection signal is similarly F₂ kHz under the constant pressing force. In this case, a change of the frequency produced by the pressing force given from the user to electronic device 11 is F₃ kHz - F₂ kHz. However, due to the constant pressing force, controller 16 determines that pressing force corresponding to a frequency change of F₃ kHz - F₁ kHz is applied. In this case, controller 16 hardly makes a correct determination of the amount of distortion of electronic device 11, and therefore, may cause electronic device 11 to malfunction.

For preventing this problem, controller 16 determines that constant pressing force is applied to electronic device 11 when the absolute value of the difference between the value of the detection signal and the reference value is not smaller than the first threshold continuously for the first duration. When determining that that constant pressing force is applied, controller 16 updates the reference value to the value of the detection signal at this moment. According to the above example, controller 16 updates the reference value from F₁ kHz to F₂ kHz. Then, controller 16 qualifies the value F₃ kHz - F₂ kHz as the difference between the value of the detection signal and the reference value when the user applies the intentional pressing force to electronic device 11 and changes the frequency of the detection signal to F₃ kHz.

In the case that the absolute value of the difference between the value of the detection signal and the reference value is not smaller than the first threshold continuously for the first duration, controller 16 executes the process for updating the reference value to the value of the detection signal at this moment, as discussed above. This process is hereinafter referred to as a second process. According to this example, controller 16 executes the second process subsequently to the first process with higher priority than the normal process. However, the second process may be executed with higher priority than the first process, or the first process may be not executed.

The second process allows an input to electronic device 11 to be more accurately detected even after a change of the steady state caused by an external factor.

According to the embodiment, controller 16 sets the first duration to 2 sec, the first duration is not limited to this time. Controller 16 can correctly determine the input from the user or the constant pressing force when the first duration is set to a duration ranging from 0.8 sec to 8 sec. Accordingly, the first duration is set to an appropriate duration in accordance with the configuration and purpose of use of electronic device 11 within the foregoing range.

In the case that the absolute value of the difference between the value of the detection signal and the reference value is smaller than the first threshold continuously for the first duration and that the average of the fluctuation of the detection signal is smaller than the second threshold, it is considered that electronic device 11 is in a state receiving none of the input and the noise, i.e., in the steady state. In this case, it is expected that the value of the signal input is identical to the reference value in the steady state. However, when a temperature around physical quantity sensor 13 changes, an expected value of the detection signal in the steady state changes accordingly. It is therefore preferable to update the reference value in this situation. In this case, controller 16 according to the embodiment updates the reference value to the value of the detection signal. This process is hereinafter referred to as a third process. Controller 16 executes the third process with higher priority than the normal process.

When the reference value is identical to the value of the detection signal in the foregoing case, the updating of the reference value by controller 16 is unnecessary. However, when the reference value is identical to the value of the detection signal, a result obtained after execution of the third process by controller 16 becomes the same as a result obtained without execution of the third process by controller 16. Accordingly, controller 16 may execute the third process to update the reference value to the value of the detection signal regardless of a relationship between the reference value and the value of the detection signal.

Physical quantity sensor 13 according to the embodiment is can calibrate a value to be set to the reference value in the steady state by executing the third process when the value to be set to the reference value changes due to external factors, such as a temperature change. Accordingly, more accurate detection is achievable.

Noise per se may decrease after the increase of at least one of the first threshold and the second threshold by the first process. More specifically, this state corresponds to such a state that the average of the fluctuation becomes smaller than the second threshold for a predetermined period of time, as area C shown in FIG. 3B. When this state continues, the second threshold may be excessively high. Accordingly, controller 16 executes a process for returning the first threshold or the second threshold, or both that have been once increased to the original values.

More specifically, in the case that the average of the fluctuation is smaller than the second threshold continuously for a third duration after the increase of at least one of the first threshold and the second threshold by the first process, controller 16 executes the process for returning the first threshold and the second threshold increased in the first process to the values before the increase. This process is hereinafter referred to as a fourth process. The fourth process is executed with higher priority than the normal process.

The third duration is identical to the second duration. However, the third duration may be longer than the second duration. When the average of the fluctuation is constantly close to the second threshold in the initial state, the average may become smaller, or not smaller than the second threshold in the initial state depending on whether or not extremely low noise is added. In this case, the second threshold frequently increases and decreases. From this viewpoint, the third duration is preferably not shorter than the second duration. Area D shown in FIGs. 3A and 3B indicates the first threshold and the second threshold after the execution of the fourth process.

As described above, physical quantity sensor 13 according to the embodiment reduces effects of external factors, such as noise, constant pressurization, temperature changes. The conventional pressure sensor disclosed in PTL 1 includes the frequency separation unit, the altitude calculation unit, and the pressure change calculation unit for correction of error factors, such as a change of a noise environment, so as to reduce an effect of noise. In this case, the configuration becomes complicated. However, physical quantity sensor 13 according to the embodiment reduces effects of external factors with a simple configuration.

According to the embodiment, physical quantity sensor 13 detects a level of a pressing force applied to electronic device 11 by detecting a change of a natural frequency corresponding to an amount of distortion produced in case 12. However, the method of detection is not limited to this example. For example, the amount of distortion produced in case 12 may be detected by detecting a change of voltage of the detection signal. Moreover, while physical quantity sensor 13 detects a distortion produced in the case as a physical quantity to be detected, physical quantity sensor 13 may be used as an acceleration sensor or an angular velocity sensor to obtain the advantages of the embodiment.

While the first duration is different from the second duration in the exemplary embodiment, the first duration may be identical to the second duration.

Controller 16 generates the control signal by software processing in the exemplary embodiment. But, controller 16 may generate the control signal by using a control circuit as hardware.

Controller 16 may add one or more processes selected from the second process, the third process, and the fourth process while giving the highest priority to the first process and the lowest priority to the normal process. In this case, respective priorities given to the second process, third process, and fourth process thus added may be arbitrarily determined.

Controller 16 can add one or more processes selected from the first process, third process, and fourth process while giving the highest priority to the second process and giving the lowest priority to the normal process. However, the fourth process is executed under assumption of execution of the first process. Respective priorities given to the first process, the third process, and the fourth process thus added may be arbitrarily determined.

### INDUSTRIAL APPLICABILITY

A method for adjusting a physical quantity sensor, and a physical quantity sensor are useful when applied to an electronic device or other devices, such as a cellular phone and a navigation system, which may be affected by effects of external factors.

### REFERENCE MARKS IN THE DRAWINGS

- 11: electronic device
- 12: case
- 13: physical quantity sensor
- 14: display unit
- 15: detector
- 16: controller
- 17: operation unit

## Claims

1. A method of adjusting a physical quantity sensor which includes a detector configure to output a detection signal in response to an input to a device, and a controller that outputs a signal corresponding to the input to the device based on the detection signal, wherein the physical quantity sensor has a first threshold and a second threshold, the first threshold is for a value of the detection signal for determining presence or absence of the input, and the second threshold is for a fluctuation of the detection signal within a predetermined duration for determining presence or absence of a noise in the detection signal, the method comprising:
allowing the detector to output the detection signal; and
executing a process for increasing at least one of the first threshold and the second threshold in cases that the value of the detection signal is within a first range corresponding to the first threshold and that the fluctuation of the detection signal within the predetermined duration is out of a second range corresponding to the second threshold.

2. The method of claim 1,
wherein the physical quantity sensor further has a first duration for which the value of the detection signal is continuously measured, a second duration for which an average of the fluctuation is continuously calculated, and a reference value that is a value of the detection signal in a steady state that none of the input and the noise is given to any of the device and the physical quantity sensor,
wherein the first range is a range of an absolute value of a difference between the value of the detection signal and the reference value, and
wherein the second range is a range of the average of the fluctuation.

3. The method of claim 2, further comprising executing, with lower priority than the process for increasing the at least one of the first threshold and the second threshold, a normal process for qualifying a difference between the reference value and a value of the detection signal as a value corresponding to a physical quantity input to the device in cases that the absolute value of the difference between the value of the detection signal and the reference value is not smaller than the first threshold and that the fluctuation becomes not smaller than the second threshold resulting from that the value of the detection signal becomes not smaller than the first threshold.

4. The method of claim 3, further comprising executing, with lower priority than the first process and with higher priority than the normal process, a second process for updating the reference value to the value of the detection signal in cases that the absolute value of the difference between the value of the detection signal and that the reference value is not smaller than the first threshold continuously for the first duration.

5. The method of claim 3, further comprising executing, with higher priority than the normal process, a process for updating the reference value to the value of the detection signal in cases that the absolute value of the difference between the value of the detection signal and the reference value is smaller than the first threshold continuously for the first duration and that the average of the fluctuation is smaller than the second threshold.

6. The method of claim 3, further comprising executing, with higher priority than the normal process, a process for updating the reference value to the value of the detection signal I cases that the absolute value of the difference between the value of the detection signal and the reference value is smaller than the first threshold continuously for the first duration, that the average of the fluctuation is smaller than the second threshold, and that the reference value is different from the value of the detection signal.

7. The method of claim 3,
wherein the physical quantity sensor further has a second duration for which the average of the fluctuation is calculated continuously, and
wherein the method further comprises executing, with higher priority than the normal process, a process for returning the first threshold and the second threshold to values of the first threshold and the second threshold prior to said executing of the first process in a case that the average of the fluctuation is smaller than the second threshold continuously for the third duration after said executing the first process.

8. The method of claim 1, wherein the device is an electronic device.

9. A method for adjusting a physical quantity sensor which included a detector that outputs a detection signal in response to an input to a device, and a controller that outputs a signal corresponding to the input to the device based on a difference between the detection signal and a reference value, wherein the physical quantity sensor has a first duration for continuously measuring a value of the detection signal, a first threshold for the value of the detection signal for determining presence or absence of the input, and a second threshold for a fluctuation of the value of the detection signal within a predetermined duration for determining presence or absence of noise in the detection signal, the method comprising:
allowing the detector to output the detection signal; and
executing a process for updating the reference value to the value of the detection signal in a case that the value of the detection signal is out of a first range corresponding to the first threshold continuously for the first duration.

10. The method of claim 9,
wherein the physical quantity sensor further has a second duration for an average of the fluctuation is calculated continuously,
wherein the reference value is a value of the detection signal in a steady state that none of the input and the noise is given to any of the device and the physical quantity sensor,
wherein the first range is a range of a threshold for an absolute value of a difference between the value of the detection signal and the reference value, and
wherein a range of the second threshold is a range of a threshold for the average of the fluctuation.

11. The method of claim 10, further comprising executing, with lower priority than the process for updating the reference value to the value of the detection signal, a normal process for qualifying a difference between the reference value and the value of the detection signal as a value corresponding to a physical quantity input to the electronic device in cases that the absolute value of the difference between the value of the detection signal and the reference value is not smaller than the first threshold and that the fluctuation become not smaller than the second threshold resulting from that the value of the detection signal become not smaller than the first threshold.

12. The method of claim 11, further comprising executing, with higher priority than the normal process, a process for updating the reference value to the value of the detection signal in cases that the absolute value of the difference between the value of the detection signal and the reference value is smaller than the first threshold continuously for the first duration and that the average of the fluctuation is smaller than the second threshold.

13. The method of claim 11, further comprising executing, with higher priority than the normal process, a process for updating the reference value to the value of the detection signal in cases that the absolute value of the difference between the value of the detection signal and the reference value is smaller than the first threshold continuously for the first duration, that the average of the fluctuation is smaller than the second threshold, and that the reference value is different from the value of the detection signal.

14. A physical quantity sensor comprising:
a detector configured to output a detection signal in response to an input to a device; and
a controller configured to output a control signal corresponding to the input to the device based on a difference between the detection signal and a reference value,
wherein a setting value of the controller is changed based on the detection signal and a fluctuation of the detection signal within a predetermined duration in a steady state,
wherein the controller has:
a first threshold of the detection signal for determining presence or absence of the input, and
a second threshold of the fluctuation of the detection signal within the predetermined duration for determining presence or absence of noise in the detection signal, and
wherein the controller increases at least one of the first threshold and the second threshold in cases that the detection signal is within a range corresponding to the first threshold and that the fluctuation of the detection signal within the predetermined duration is out of a range corresponding to the second threshold.
